Europäisches Patentamt

European Patent Office

Office européen des brevets

(19)

(11) Veröffentlichungsnummer: **0 197 537**
**A1**

# (12) EUROPÄISCHE PATENTANMELDUNG

(21) Anmeldenummer: 86104734.8

(22) Anmeldetag: 12.02.83

(51) Int. Cl.⁴: **A01G 7/04 , A01G 25/00**

(30) Priorität: 16.02.82 CH 961/82

(43) Veröffentlichungstag der Anmeldung:
**15.10.86 Patentblatt 86/42**

(60) Publication number of the original application in
accordance with Art.76 EPC: 0 087 663

(84) Benannte Vertragsstaaten:
**AT BE CH DE FR GB IT LI NL SE**

(71) Anmelder: **ELTAC Nogler & Daum KG**
**Speckbacherstrasse 29**
**A-6020 Innsbruck(AT)**

(72) Erfinder: **Oppitz, Hans**
**Heidestrasse 40**
**A-6060 Mils(AT)**

(74) Vertreter: **Rau, Manfred, Dr. Dipl.-Ing. et al**
**Rau & Schneck, Patentanwälte Königstrasse**
**2**
**D-8500 Nürnberg 1(DE)**

(54) **Verfahren zur Erhöhung der Bodenfeuchtigkeit von Böden.**

(57) Verfahren zur Erhöhung der Bodenfeuchtigkeit auf elektroosmotischem Weg, bei der eine im Vegetationsbereich von Böden unter der Bodenoberfläche verlegte als Kathode wirkende Elektrode über ein Leitungssystem an eine in einem tieferen Bodenbereich verlegte positive Elektrode angeschlossen wird, worauf der über das elektrische Feld geschlossene Stromkreis mit Eigen-Potential-differenz oder mit Fremdspannung wie andere betrieben wird. In einem ersten Verfahrensschritt wird ein elektrisches Feld zwischen einer, in einer Bodenschicht (2) unterhalb der Wurzeln (9,10,11,12) verlegten positiven Elektrode (62) und einer, zwischen den Wurzelenden - (28,59) und der Bodenoberfläche (3) verlegten negativen Elektrode als Kathode (61) aufgebaut. Danach wird ein tieferer, insbesondere wasserführender Bereich (14) über eine positiv Elektrode als Anode (50) aktiviert. Dieser wird mit den beiden an negatives Potential angeschlossenen, im Beireich der Wurzeln angeorneten Elektroden (61,62) zusammengeschaltet.

Fig. 4

## Verfahren zur Erhöhung der Bodenfeuchtigkeit von Böden

Die Erfindung betrifft ein Verfahren und eine Vorrichtung zur Erhöhung der Bodenfeuchtigkeit von Böden nach dem Oberbegriff von Patentanspruch 1.

Es wurde bereits vorgeschlagen, im Erdboden ein elektrisches Feld aufzubauen (vgl. DE-C 25 03 670), indem Elektroden in das Erdreich eingelagert werden, um beispielsweise bei zu niederem natürlichen Grundwasserstand beziehungsweise zu schlechter Kapillarwirkung des Erdreiches eine gezielte Bewegung des Grundwassers zu bewirken.

Weiterhin ist es bekannt, Elektroden aus Polytetrafluoräthylen (PTFE) zu verwenden, das mit leitfähigen Materialien gefüllt ist. Diese Materialien können durch Kohlenstoff, z.B. Kunstkohle, Graphit oder gefüllt sein.

Eine weitere Anlage ist aus der FR-A-2 402 424 bekannt. Die Elektroden dieser vorbekannten Anlage werden durch Metalldrähte oder durch ein Netz Metalldrähten gebildet und weisen dementsprechend keine hinreichende mechanische und chemische Widerstandsfähigkeit auf.

Der Erfindung liegt die Aufgabe zugrunde, ein Verfahren und eine Vorrichtung zum Aufbau eines elektrischen Feldes der bekannten Art zu schaffen, mit der der Aufbau eines großflächigen homogenen elektrischen Feldes möglich ist, welche sowohl im aktiven als auch im passiven Betrieb eingesetzt werden kann, und deren Elektroden eine hohe chemische und mechanische Belastbarkeit aufweisen.

Diese Aufgabe wird gelöst durch den kennzeichnenden Teil von Patentanspruch 1. Die Anwendung dieses Verfahrens bewirkt eine Abnahme der Schwermetallkonzentration im Boden wegen der elektrochemischen Abscheidung der entsprechenden Ionen an der verlegten negativen Elektrode bzw. der Salze an der positiven Anode. Damit können Geestlandschaften und Trockengebiete mit großem Salzgehalt bepflanzt sowie beispielsweise durch Salz verseuchte Landschaftsteile, wie beispielsweise die Straßenränder, von Salz befreit werden, sodaß ein günstiger Verlauf der Vegetation erreicht wird. Durch die Anordnung mehrerer als Kathoden dienender Elektroden ist es überdies möglich, einen kaskadenförmigen Feldaufbau zu erzielen, d.h. mehrere sich zumindest bereichsweise überdeckende elektrische Felder aufzubauen, um entsprechend den Bodenverhältnissen durch eine ausreichende Stromaufnahme im elektrischen Feld einen ausreichenden Wassertransport sicherzustellen.

Die Erfindung umfaßt auch eine Vorrichtung zur Durchführung des Verfahrens.

Diese Vorrichtung ist im Patentanspruch 2 gekennzeichnet. Bei Einsatz der Elektrode, die in dem den Wurzelenden nahe benachbarten Bodenbereich angeordnet ist, als Anode werden die negativ geladenen Salzreste aus dem Vegetationsbereich in den Bereich unterhalb der Wurzeln abgeführt. Die Metallionen werden an der im Wurzelbereich befindlichen, als Kathode geschalteten Elektrode abgelagert. Durch den intensiven Feldaufbau im Vegetationsbereich erfolgt dieser Salzabbau sehr rasch, sodaß in kurzer Zeit eine durchgreifende Bodenverbesserung erzielt wird, die eine Neuanpflanzung oder eine Sanierung einer bestehenden Befplanzung erleichtert. Werden dann die beiden, den Wurzelbereichen zugeordneten Elektroden zusammengeschaltet und als Kathode verwendet, so wandern die ursprünglich unter den Wurzeln abgelagerten Salze in den Bereich der tiefer liegenden Anode ab, sodaß sich bei einer weiteren Wurzelentwicklung der Pflanzen diese Salzreste nicht schädlich auf die Neubepflanzung auswirken können. Mit Vorteil ist diese Anlage daher zur Sanierung von Geestlandschaften, für die Bepflanzung von Trockengebieten mit großem Salzgehalt, für die Sanierung von Geländeteilen an den Straßenrändern, zum Abbau der im Boden gespeicherten Streusalze einsetzbar. Darüberhinaus ist es auch von Vorteil, daß es durch die Anordnung der beiden übereinander liegenden als Kathode wirkenden Elektroden zum Aufbau von sich teilweise überdeckenden elektrischen Feldern kommt, die den Wassertransport bzw. Feuchtigkeits-und Nährstofftransport in Richtung der Wurzeln der Pflanzen verstärken bzw. durch entsprechende Kontaktierung der als Anoden und/oder Kathoden verwendeten Elektrode die Wanderungsrichtung der Salze sowie der Flüssigkeit zusätzlich verändert werden kann.

Eine weitere Ausbildung der Vorrichtung ist im Patenanspruch 3 beschrieben. Dadurch kann das System einfach zur Wasserhaltung im Bereich der Wurzeln oder zum Hochziehe von Feuchtigkeit aus tieferen Bodenschichten bzw. zum Abtransport von negativ geladenen Salzresten in tiefere Bodenschichten verwendet werden.

Eine weitere Ausführungsvariante der Vorrichtung ist im Patentanspruch 4 beschrieben. Durch die Anordnung mehrerer parallel zueinander Verlaufender Kathoden ist es möglich, sowohl ein flächiges als auch räumlich versetztes elektrisches Feld aufzubauen und somit einen definierten Wassertransport in die unterschiedlichen Bereiche der Pflanzen sicherzustellen.

Eine andere Weiterbildung der Vorrichtung ist im Patentanspruch 5 beschrieben. Dadurch wird über den größten Teil des Wurzelbereiches eine ausreichende Versorgung mit Feuchtigkeit erreicht.

Schließlich ist auch eine Ausführung gemauaß Patentanspruch 6 möglich. Dadurch wird ein ausreichender Wassertransport aus den tiefer liegenden wasserführenden Bodenschichten in den Vegetationsbereich erzielt. Gleichzeitig wird verhindert, daß durch einen Rückstau des Oberflächenwassers die Bodenoberfläche·feucht bleibt, wodurch die - schädlichen Einflüsse, wie Schneckenbefall und Moosbildung, ausgeschaltet werden. Weiters werden die Nährstoffe für die Pflanzen im Wurzelbereich gehalten, da sie unter die Elektrode nicht absinken können.

Zumm besseren Verständnis der Erfindung wird diese im folgenden anhand der in den Zeichnungen dargestellten Ausführungsbeispiele näher erläutert.

Es zeigen:

Fig. 1 eine erfindungsgemäße Anlage in Stirnansicht;

Fig. 2 eine schaubildliche Darstellung einer anders ausgebildeten erfindungsgemäßen Anlage, unter Verwendung eines Netzes als Kathode;

Fig. 3 eine Variante einer erfindungsgemäßen Anlage zur Wassergewinnung in Trockengebieten mit Netz bzw. rohrförmigen Kathoden;

Fig. 4 eine weitere Ausführungsvariante der erfindungsgemäßen Anlage mit mehreren Elektroden;

Fig. 5 eine schaubildliche Darstellung einer durch ein Netz gebildeten erfindungsgemäß aufgebauten Elektrode;

Fig. 6 eine Stirnansicht einer erfindungsgemäß ausgebildeten Verteilungsleitung.

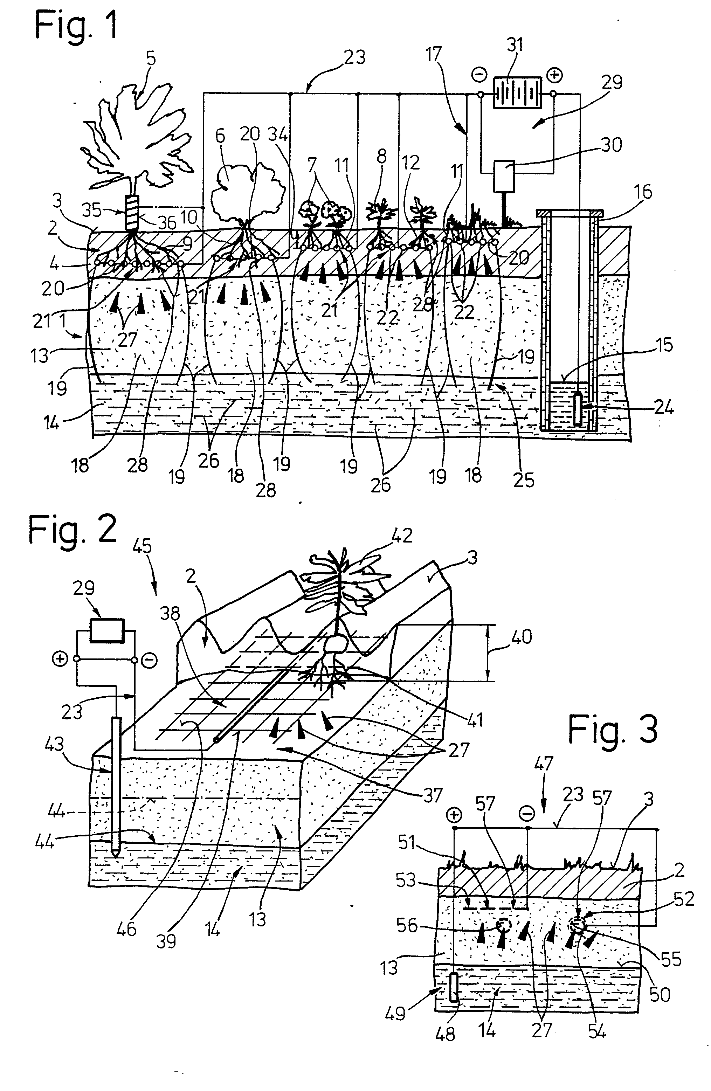

In Fig. 1 ist ein Schnitt durch verschiedene Bodenschichten eines Bodens 1, z.B. eines Erdbodens, gezeigt. In einem Vegetationsbereich 2 unterhalb einer Oberfläche 3 ist Humus 4 vorgesehen. Aus diesem Humus 4 beziehen Bäume 5, Sträucher 6, Blumen 7 sowie Gemüsepflanzen 8 über die Wurzeln 9 bis 12 ihre Nährstoffe. Unterhalb dieses Vegetationsbereiches 2 befindet sich ein Bodenbereich 13 aus sandigem und stark wasserdurchlässigem Material, darunter ein wasserführender Bodenbereich 14. Die Höhe der wasserführenden Schichten ist anhand eines Wasserspiegels 15 in einem Brunnen 16 zu ersehen. Um zu verhindern, daß das Oberflächenwasser durch die unterhalb des Vegetationsbereiches 2 befindlichen sandigen Bodenbereiche 13 sofort nach unten absickert bzw. um zu erreichen, daß mit den im Bodenbereich 14 gespeicherten Flüssigkeitsmengen die Wurzeln 9 bis 12 im Vegetationsbereich 2 befeuchtet werden, ist eine Anlage 17 zum Aufbau eines elektrischen Feldes 18, von welchem elektrische Feldlinien 19 dargestellt sind, vorgesehen. Diese Anlage 17 umfaßt mehrere als Kathoden 20 verwendete Elektroden 21, die jeweils aus mehreren einander nahe benachbarten und parallel zueinander verlaufenden Verteilungsleitungen 22 gebildet sind. Die einzelnen Kathoden 20 sind mit einem Leitungssystem 23 zusammengeschaltet, welches die kathoden 20 mit einer, unter dem Wasserspiegel 15 angeordneten, am positives Potential gelegten Elektrode 24, verbindet. Weist die Elektrode 24 einen hohen Leitwert und einen geringen Übergangswiderstand auf, so führt dies zu einer guten Kontaktierung der im Bodenbereich 14 gespeicherten Flüssigkeitsmengen. Dadurch liegt die gesamte Flüssigkeitsmenge mit dieser Bodenschicht am positiven Potential und bildet die Anode 25. Wird die Anode 25 mit den Kathoden 20 über das Leitungssystem 23 verbunden, so baut sich durch den unterschiedlichen pH-Wert im Vegetationsbereich 2 bzw. im wasserführenden Bodenbereich 14, bedingt durch die Anreicherung von Salzen, in der Flüssigkeit ein Potentialunterschied auf. Dieser Potentialunterschied führt zu einem Aufbau von elektrischen Feldern 18, die zwischen den einzelnen Kathoden 20 sowie der Anode 25 durch Feldlinien 19 schematisch angedeutet sind. Der Aufbau dieser elektrischen Felder 18 bewirkt einen elektroosmotischen Effekt, durch den Wasser 26 aus der Bodenschicht 14 in Richtung des Minuspols nämlich der Kathoden 20, transportiert wird. Dieser, durch die unterschiedlichen Polaritäten bedingte Wassertransport ist durch Pfeile 27 angedeutet.

Dadurch, daß die Elektroden mehrere parallel zueinanderm jedoch nahe benachbarte Verteilungsleitungen 21 umfassen, entstehen breite starke elektrische Felder 18 mit insgesamt geringen Stromstärken, sodaß Beschädigungen der Wurzelenden 28, der Wurzeln 9 bis 12 sowie von Mikroorganismen im Vegetationsbereich 2 vermieden werden.

Um die Wirkung des elektroosmotischen Effektes bzw. die Stärke der elektrischen Felder 18 konstant auf einem vorbestimmten Wert zu halten, ist es möglich, in das Leitungssystem eine Energiequelle 29 zwischenzuschalten. Diese Energiequelle besteht im dargestellten Ausführungsbeispiel aus einer Sonnenenergiezelle 30 und einem Energiespeicher, z.B. einer Batterie 31, die fakultativ zusätzlich für einen Pufferbetrieb in der Nacht vorgesehen sein kann. Vielfach wird jedoch mit der Sonnenenergie 30 das Auslangen gefunden, da der hohe Flüssigkeitsbedarf für die Bäume 5, Sträucher 6, Blumen 7 und Gemüsepflanzen 8 in den Blumenbeeten 32 bzw. in den Gemüsebeeten 33 während der Einstrahlung der Sonne besteht. Zu dieser Zeit wird aber über die Sonnenenergiezelle 30 Fremdenergie den Elektroden 21,24, nämlich der Kathode 20 und Anode 25, zugeführt, sodaß ein verstärkter Wassertransport in Richtung der Pfeile 27, also zu den Wurzeln 9 bis 12 gegeben ist.

Gleichzeitig wird aber auch die Anordnung der Kathoden 20 erreicht, daß nach Niederschlägen des Oberflächenwasser nicht so rasch in den Bodenbereich 13 absinken kann, da die Kathoden 20 mit der Anode 25 eine sogenannte Horizontalsperre bilden, die einen Wassertransport in zu den Pfeilen 27 entgegengesetzte Richtung verhindern. Damit werden aber auch die an der Bodenoberfläche 3 eingebrachten Düngemittel gemeinsam mit der Feuchtigkeit im Vegetationsbereich 2 gehalten, sodaß den Wurzeln 9 bis 12 ausreichend Nährstoff zugeführt wird. Dies bewirkt ein rascheres Pflanzenwachstum sowie einen höheren Ertrag und ermöglicht es, die Bewässerung von der Bodenoberfläche her zu verringern.

Hierbei hat sich in Blumen-bzw. Gemüsebeeten 32 bzw. 33 gezeigt, daß eine Anordnung der Elektroden 20 in einem Abstand 34 von ca. 20 bis 40 cm unterhalb der Bodenoberfläche 3 eine Trockenhaltung der Erdkrumme an der Bodenoberfläche 3 ermöglicht und einen ausreichenden Wassertransport in den Bereich der Wurzeln 11 und 12 sicherstellt. Bevorzugt wird hierbei zwischen der Anode 25 und den Kathoden 20 durch die Energiequelle 29 eine Spannung von 6 Volt abgegeben und ein Strom von ca. 50 m A eingespeist. Die damit aufgebauten Felder reichen aus, um einen ausreichenden elektroosmotischen Wassertransport von dem Bodenbereich 14 in den Vegetationsbereich 2 zu bewirken.

Ein weiterer Vorteil wird beim Einsatz der erfindungsgemäßen Anlage nach Fig. 1 in Glashäusern erreicht, die mit wärmedämmenden Glas errichtet worden sind. Die durch die hohe Isolierwirkung des wärmedämmenden Glases zurückgehaltene Wärme bewirkt naturgemäß eine starke Verdunstung des über die Bodenoberfläche 3 den Pflanzen zugeführten Wassers. Dieser Verdunstungsvorgang des Wassers erzeugt wiederum Kälte, die einen überhöhten Aufwand an Heizleistung erfordert. Wird das für die Pflanzen benötigte Wasser nunmehr nicht über die Bodenoberfläche 3, sondern aus tiefer liegenden Bodenbereichen 14 unter Einsatz der Elektroosmose zugeführt, so bleibt die Bondenoberfläche trocken und die Wasserverdunstung wird verringert. Durch die wesentlich geringere Luftfeuchtigkeit in den Glashäusern kann mit weniger Heizenergie das Auslangen gefunden werden und der Pilzbefall wurde verringert.

Wie weiters in Fig. 1 schematisch angedeutet, kann zum verstärkten Wassertransport in Bäumen eine Elektrode 35 um einen Stamm des Baumes 5 verlegt werden. Diese als Kathode 36 geschaltete Elektrode 35 kann über eine Leitung an das Leitungssystem 23 angeschlossen sein. Dadurch wird der Wassertransport nicht nur bis in den Bereich der Wurzeln 9, sondern auch innerhalb des Stammes angeregt und es kann der Ertrag, vor allem in Obstkulturen, gesteigert werden.

In Fig. 2 ist ein Ausführungsbeispiel gezeigt, bei dem eine eine Elektrode 37 bildende Kathode 38 durch ein Netz 39 gebildet ist. Dieses Netz 39 ist in einer Distanz 40 unterhalb der Bodenoberfläche 3 angeordnet. Das Netz 39 befindet sich im Bereich von Wurzeln 41 einer Pflanze 42 und gewährleistet, daß die Nährstoffe bzw. die Feuchtigkeit im Bereich der Wurzeln 41 gehalten wird und die Bodenoberfläche 3 trocken ist. Die Trockenhaltung der Bodenoberfläche verhindert, daß - schädliche Flora und Fauna entsteht. Um Wasser aus dem wasserführenden Bodenbereich 14 in den Vegetationsbereich 2 hochzufördern,-Pfeil 27 -ist die Kathode 38 über ein Leitungssystem 23 mit einer Elektrode 43, beispielsweise einer mit Kohlenstoff gefüllten Kunststoffelektrode, zusammengeschaltet. Wichtig ist bei derartigen Elektroden 43, vor allem wenn sie an positives Potential angelegt werden, daß sie einen hohen Leitwert und einen geringen Übergangswiderstand haben. Werden diese Voraussetzungen erfüllt, so wird eine gute Kontaktierung der umgebenden wasserführenden Bodenschicht 14 erreicht, sodaß die gesamte Bodenschicht 14 als Anode 44 wirkt. Das elektrische Feld wird daher zwischen der, als Anode 44 dienenden Bodenschicht 14 sowie dem Netz 39 hergestellt, wodurch sich eine große Flächenausdehnung des elektrischen Feldes und eine entsprechend starke Feldwirkung ergibt.

Bei der Inbetriebnahme einer derartigen Anlage 45 werden die Kathode 38 bzw die Anode 44 über eine Energiequelle 29, die durch eine Batterie bzw. einem anderen Stromerzeuger gebildet sein kann , verbunden. Dies bewirkt eine Aktivierung des, sich naturgemäß aus dem pH-Wert-Unterschied zwischen dem wasserführenden Bodenbereich 14 und dem Vegetationsbereich 2 ergebenden Potentialunterschiedes. Dieser Potentialunterschied ist vielfach durch die in der Flüssigkeit gelösten Salze im Bodenbereich 14 gegenüber dem Vegetationsbereich 2 gegeben. Wird am Beginn eines derartigen elektroosmotischen Verfahrens durch Zufuhr von Fremdenergie ein kräftiges elektrisches Feld aufgebaut, so wandert die Feuchtigkeit 44 durch den Bodenbereich 13 in Richtung auf den Vegetationsbereich 2 und somit verlagert sich auch die Anode 44, wie mit strichlierten Linien angedeutet, in Richtung zur Bodenoberfläche 3. Wird dann nach der Anlaufphase die Fremdspannungszufuhr unterbrochen, so ist durch den geringeren Abstand zwischen der Anode 44 und der Kathode 38 ein intensiverer passiver Betrieb möglich, da durch die Potentialunterschiede zwischen dem Wasser, welches einen höheren Leitwert aufweist, und dem Vegetationsbereich 2 ein intensives Feld aufgebaut wird, in dem es zu einem Stromfluß kommt, der den osmotischen Wassertransport in Richtung der Wurzeln 41 der Pflanzen 42 bewirkt.

Wie ersichtlich, hat die als Netz 39 ausgebildete Kathode 38 den Vorteil, daß die Wurzeln 41 der Pflanzen 42 durch die Öffnungen 46 des Netzes 39 hindurchtreten. Die Wurzeln können sich daher ungestört ausbreiten und am großflächigen Netz 39 werden auch die Schwermetallionen, die sich im Erdboden befinden, abgeschieden. Die feinen Wurzeln 41 werden durch die Metallionen daher nicht geschädigt.

Um den einzelnen zu fördernden Pflanzen bzw. Bäumen und dgl. zu entsprechen, kann die Maschenweite des Netzes 39 auf die unterschiedlichsten Anwendungsfälle abgestellt werden.

Der überraschende Vorteil beim Einsatz eines Netzes als Kathode liegt aber vor allem darin, daß ein großflächiges elektrisches Feld aufgebaut wird, in dem annähernd gleiche elektrisches Verhältnisse herrschen, sodaß ein einheitlicher Wassertransport in Richtung der Pfeile 27 ohne Zerstörung von Wurzeln durch zu hohe Stromstärken erreicht wird.

In Garten-und Gemüsekulturanlagen bewirkt die Anwendung der Anlage bzw. der Einsatz des Verfahrens die Verringerung von Begiessungen, und zwar sowohl hinsichtlich Menge wie auch Frequenz derselben, Verringerung der Düngung, da die Düngemittel jetzt nicht mehr so leicht aus dem Vegetationsbereich ausgeschwemmt werden, sowie die Abnahme der Schwermetallkonzentration im Boden wegen der elektrochemischen Abscheidung der entsprechenden Ionen an der verlegten negativen Elektrode. Bei derartigen Anwendungen wird vorteilhafterweise ein relativ grobmaschiges Gitter verlegt, welches den Durchtritt der Wurzeln der Anpflanzungen erlaubt. Die Lage des verlegten Gitters hinsichtlich der Bodenoberfläche ist ebenfalls von grossem Einfluss. Bei günstiger Verlegungstiefe kann erreicht werden, daß die Bodenoberfläche praktisch trocken bleibt. Dadurch wird der Bewuchs derselben mit unerwünschter Flora, speziell Moos, verhindert. Auch der Befall der Bodenoberfläche mit schädlicher Fauna, wie Schnecken, usw. wird reduziert.

Die im folgenden beschriebenen Versuche stellen spezielle Ausführungen der Erfindung, d.h. des Verfahrens, und der Anwendungen des Verfahrens bzw. der Anlage dar; naturgemäß können hier nur einige wenige solcher Ausführungsformen wiedergegeben werden.

Im Treibhaus eines Stadtgartens einer mitteleuropäischen Stadt wurden in zwei Beeten mit Schnittblumen in einer Tiefe von 30 cm zwei, bzw. ein durch Netze bzw. Gitter gebildete Elektroden der Dimensionen 4,5 x 1 m verlegt. Diese Gitter bestehen aus einem nicht verrottbarem Kuntstoff-Trägermaterial mit einer Beschichtung aus leitendem Material, sind flexibel und weisen in der Mitte ein oder mehrere Lahn-Bänder aus phosphatiertem Kupfer, das noch versilbert ist, zur Stromzuführung auf.

Als Anode wurden zwei Erdungsleitungen an den Treibhauswänden verwendet.

Ohne Fremdspannung zeigte der mittels Litzen verbundene Stromkreis eine Spannung von 0,6 Volt und eine Stromstärke von 3,2 mA.

Bei Anlegen von 6 Volt Außenspannung stieg die Stromstärke auf 101 mA an.

Der Versuch wird mit 6 Volt Spannung gefahren; dabei zeigte es sich, daß die mittels dem erfindungsgemäßen Verfahren behandelten Beete praktisch nicht mehr begossen und gedüngt werden müssen und dies seit etwa 6 Monaten.

Auch vor dem Anschließen der verlegten Gitter an die Erdungsleitungen konnte ein äußerst positiver Einfluß der genannten Gitter festgestellt werden; wurden -nach Verlegung der Gitter -die Beete bewässert, so zeigten die Beete mit Gitter ein zumindest doppelt so großes Wasserrückhaltevermögen, verglichen mit Beeten ohne Gitter. Das Beet blieb über den Gittern wesentlich länger feucht als an denjenigen Stellen, wo kein Gitter verlegt worden war.

Weiters wurde auf einer Atlantik-Insel der Versuch Baranco-Hondo gefahren:

In einem Ziergarten mit relativ trockenem, weil Wasser gut ableitendem Boden, wurde eine Gitterelektrode der Dimension 4,7 m x 46 cm in 24 cm Tiefe verlegt und an eine Ringwasserleitung als Erdung angeschlossen. Ohne Fremdspannung betrugen die elektrischen Werte 0,6 Volt und 2,2 mA; bei 6 Volt Fremdspannung 22 mA nach Inbetriebnahme und 48mA 24 Stunden später.

Auch hier zeigte es sich, daß der mit dem Gitter versehene Streifen des Gartens wesentlich weniger oft begossen werden mußte. Die Blumen auf diesem Streifen waren beispielsweise nach einer längeren Abwesenheit des Gutsbesitzers noch frisch, währenddem die gleichen Blumen in etwa 1 m Entfernung vom Gitter stark trockenheitsgeschädigt waren.

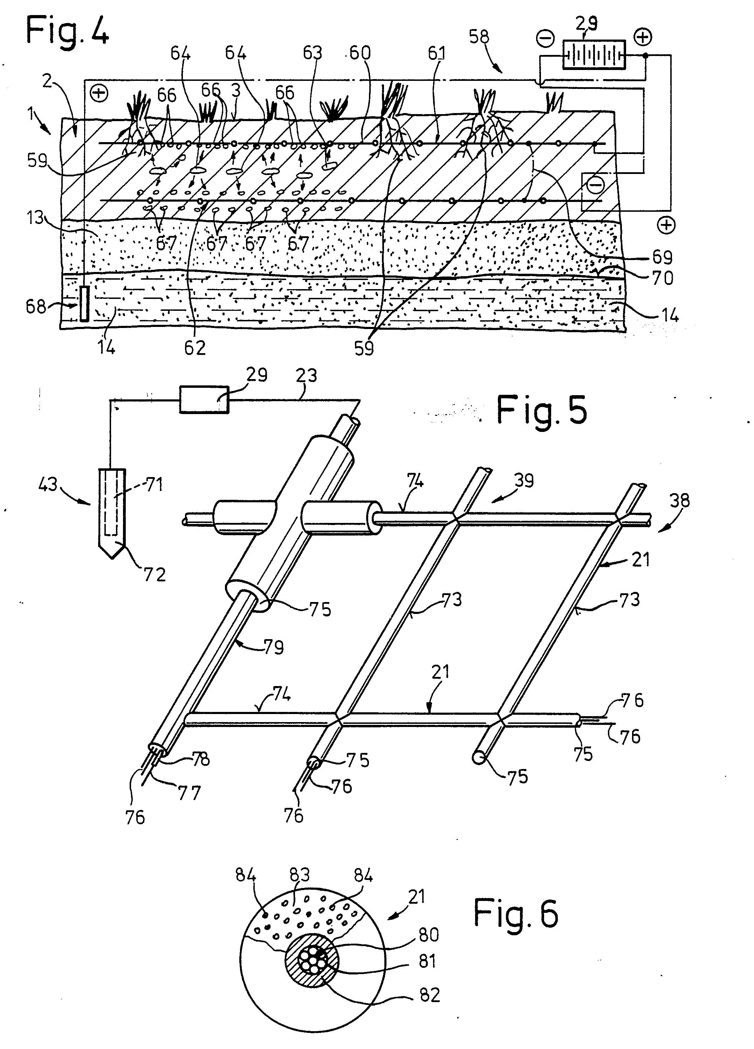

In Fig. 3 ist eine Anlage 47 zur Wassergewinnung bzw. zur gleichzeitigen Wasserversorgung von Pflanzen gezeigt. Diese Anlage 47 umfaßt eine, in einem tieferen wasserführenden Bodenbereich 14 durch einen Kohlestab 48 gebildete Elektrode 49 mit der die Feuchtigkeit im Bodenbereich 14 an positives Potential angelegt wird, sodaß dieser gesamte Bodenbereich 14 als Anode 50 wirkt. Unterhalb der Bodenoberfläche 3 sind Elektroden 51, 52 angeordnet. Die Elektrode 51 wird durch ein Netz-53 wie es in Fig.5 noch näher beschrieben werden wird -bzw. einen leitenden Kunststoff 54, mit dem Drainagerohre 55 beschichtet sind, gebildet. Unterhalb des Netzes 53 sind ebenfalls Drainagerohre 56 angeordnet. Werden die als Kathoden 57 verwendeten Elektroden 51,52 mit der Anode 50 über ein Leitungssystem 23 zusammengeschaltet, so kommt es zwischen der Anode 50 und den Kathoden 57 zum Aufbau eines elektrischen Feldes, zu einem Stromfluß und somit zu einem Wassertransport aus der wasserführenden Bodenschicht 14 in Richtung der Drainagerohre 55 bzw. 56, wie dies mit Pfeilen 27 angedeutet ist. Das in dem Bodenbereich 13 hochsteigende Wasser wird zum Teil in Drainagerohren 55,56 aufgefangen. Die übrige hochsteigende Bodenfeuchtigkeit wird dem Wurzelbereich der Pflanzen im Bereich der Bodenoberfläche 3 bzw. dem Vegetationsbereich 2 zugeführt. Eine derartige Anlage 47 wurde zu Versuchszwecken auf einer Atlantik-Insel betrieben:

In einem Gartenbaubetrieb mit relativ trockenem Boden wurden zwei Streifen Netze 53 bzw. Gitter der Dimensionen 4 m x 46 cm und 3 m x 46 cm in einer Tiefe von 22 cm verlegt. Angeschlossen wurden die Gitter an ein Eisenrohr, welches in eine Sickergrube verlegt wurde. Ohne äußere Fremdspannung ergab sich 0,55 Volt und 4,1 mA; bei Anschluß von 6 Volt Fremdspannung zeigten sich 24 mA nach der Inbetriebnahme, 41 mA nach zwei Stunden und 56 mA 6 Stunden später.

Auch hier waren die Auswirkungen des verlegten Netzes offensichtlich; die Kulturen über diesem Streifen mußten weniger begossen werden und machten allgemein einen frischeren Eindruck.

Unter einem Teil des 3 m langen Streifens wurde anschließend ein Drainagerohr aus Kunststoff mit einem Durchmesser von 5 cm verlegt. Der Gartenbaubetrieb liegt etwa 15 m über der Küste, sodaß angenommen werden kann, daß mindestens ein Teil der wasserführenden Schichten unter dem Versuchsgebiet Meerwasser enthalten. Im Drainagerohr wurde nun Meerwasser aufgefangen, welches klar war und praktisch keinen salzigen Eindruck beim Trinken hinterließ.

Mit ein Grund, warum das in den Drainagerohren 55 bzw. 56 aufgefangene Meerwasser beim Trinkem keinen salzigen Eindruck hinterließ, liegt darin, daß durch die Elektrophorese Partikel negativer Ladung zur Anode 50 wandern. Nachdem Salze aus positiv geladenen Metallionen und einem negativ geladenen "Salzrest" aufgebaut sind, werden die Partikel verschiedener Ladung getrennt und die Partikel negativer Ladung, also die "Salzreste", wie z.B. $Cl$, $No_3$ sowie $CH_3$, $Po_4 3$ sowie $Hco_3$ wandern zur Anode 50 und werden dort abgelagert.

In Fig. 4 ist eine Anlage 58 gezeigt, wie sie zur Entsalzung von Böden 1, insbesondere im Vegetationsbereich 2, verwendet wird. Hierzu sind im Vegetationsbereich 2 zwischen den Wurzelenden 59 und der Bodenoberfläche 3 eine, durch ein Netz 60 gebildete Elektrode 61, angeordnet. Unterhalb der Wurzelenden 59 ist eine weitere, ebenfalls durch ein Netz 60 gebildete Elektrode 62, angeordnet. Im Vegetationsbereich sind nun, wie schematisch angedeutet, Schwermetalle 63 und Salze 64 vorhanden. Dies kommt insbesondere im Randbereich bzw. Mittelstreifenbereich von stark befahrenen Straßen durch die Salzstreuung bzw. den Niederschlag, der Autoabgase sehr häufig vor. Wird nun die Elektrode 62 an positives und die Elektrode 61 an negatives Potential einer Energiequelle 29, beispielsweise einer Batterie 65, gelegt, so kommt es zu einer Elektrophorese bzw. Elektrolyse. Die positiven Metallionen, nämlich die Kationen 66, wie z.B. $K^+$, $Cu^{2+}$, $PB^{2+}$, $Na^+$ und $Ca^{2+}$ wandern folglich zu der an negatives Potential angeschlossenen Elektrode 61 und lagern sich, wie weiters schematisch angedeutet, an dem diese Elektrode 61 bildende Netz 60 ab.

Der negativ geladene Salzrest, nämlich die Anionen 67 und die Hydroxydionen, wie z.B. $Cl^-$, $No_3^-$, $Po_4 3-$, $So_4 2-$, $Hco_3-$, $Coo^-$, $Oh^-$ sowie $Ch_3^-$ wandern dagegen in Richtung des tieferen Bodenbereiches 13 zu der an positives Potential angeschlossenen Elektrode 62 und werden dort abgelagert.

Durch das zwischen den beiden Elektroden 61,62 aufgebaute intensive elektrische Feld tritt in kurzer Zeit eine Entsalzung dieses Bodenbereiches auf, da sie Salze in tiefere Bodenschichten abwan-

dern. Gleichzeitig werden die Schwermetalle an der Elektrode 61 abgeschieden und bei entsprechender Ausgestaltung des Netzes 60 dort niedergeschlagen, sodaß sie nicht mehr in Lösung gehen können.

Im Anschluß an diese Sanierungsmaßnahme kann zur Sanierung der Pflanzen bzw. zur Neubepflanzung eine Elektrode 68 in tieferen wasserführenden Bodenschichten 14 angeordnet und an positives Potential -wie mit strichpunktierten Linien angedeutet -angeschlossen werden. Die beiden Elektroden 61,62 werden dann an negatives Potential angeschlossen und dienen beide als Elektroden. Bevorzugt werden hierbei die beiden Gitter 60 der Elektroden 61 und 62, wie ebenfalls mit strichlierten Linien angedeutet, durch eine Verbindungsleitung 69 miteinander verbunden, sodaß sie am gleichen Potential liegen. Damit kann es zu keiner elektrochemischen Verseuchung durch pH-Wert-Unterschiede im Bereich der beiden Elektroden 61 und 62 kommen.

Nach Einschaltung der Elektrode 68 und der Kontaktierung des wasserführenden Bodenbereiches 14 als Anode 70 wandern die ursprünglich im Bereich der Elektrode 62 abgelagerten Anionen 67, nämlich die "Salzreste" weiter in Richtung der tieferliegenden Bodenschichten 14 und werden im Bereich dieser wasserführenden Bodenschicht abgelagert. Damit werden sie aus dem Vegetationsbereich völlig entfernt. Gleichzeitig tritt bei Verwendung der Anlage in der zuletzt beschriebenen Art ein verstärkter Wassertransport in Richtung der Wurzelenden 59 auf, sodaß nach der Sanierung des Vegetationsbereiches 2 ein beschleunigtes Pflanzenwachstum eintritt bzw. Neupflanzungen sich nach kurzer Zeit positiv entwickeln können.

Durch eine derartige Anordnung der Elektroden und dem Betrieb der Anlage nach einem erfindungsgemäßen Verfahren ist es möglich, sowohl Geestlandschaften als auch Trockengebiete mit großem Salzgehalt zu bepflanzen bzw. die Bepflanzung im Bereich von Straßenrändern, die durch Streusalzablagerung schwer geschädigt ist, zu sanieren bzw. unter Ausschaltung der schädlichen Salzeinwirkungen zu erneuern.

In Fig. 5 ist das Kathode 38 bildende Netz 39, welches mit einem Leitungssystem 22, beispielweise unter Zwischenschaltung einer Energiequelle 29 mit einer Elektrode 43 verbunden ist, gezeigt. Die Elektrode 43 kann anstelle der in Fig. 2 gezeigten Ausführungsform durch einen Metallstab 71 gebildet sein, der mit einem elektrisch leitenden Kunststoff 72 umgeben ist.

Das Netz 39 besteht aus einzelnen Fäden 73,74, die zugleich die Verteilungsleitungen 21 bilden. Diese Fäden 73, 74 können aus einem leitenden Kunststoff 75 bestehen, der in der Art eines Duroplastes mit einem makromolekularem Aufbau gebildet ist und z.B. aus einem Acrylat mit mindestens zum Teil vernetzten Polymeren besteht. In diesem Kunststoff 75 können Fäden 76 aus Karbon bzw. die Fäden 77 aus Metall, die vorzugsweise mit einer Silberbeschichtung 78 versehen sind, eingebettet sein. Diese Fäden 76,77 sind zur Leitwerterhöhung zumindest in eine Stromversorgungsleitung 79, die das Netz 39 mit dem Leitungssystem 23 verbindet, eingebettet.

Selbstverständlich ist es, wie dies schematisch in Fig. 5 weiters angedeutet ist auch möglich, daß die Karbon-und Metallfäden 76,77 in einem beliebigen Kunststoff, z.B. Polyamid, Acryl, Polyester oder dgl., zum Bilden der Fäden 73 bzw. 74 des Netzes 39 eingebettet werden können. In deisem Fall wird, wie dies schematisch an einem Teil des Netzes 39 angedeutet ist, das Netz in einem leitenden Kunststoff 75 eingebettet. Durch diese Ausbildung des Netzes 39 wird neben einer guten Leitfähigkeit über eine große Fläche ein mechanisch widerstandsfähiger Baukörper geschaffen, der auch beim Einbau in Vegetationsbereichen bzw. Bodenschichten beim Befahren mit Bearbeitungsmaschinen nicht verletzt bzw. zerstört werden kann.

In Fig 6 ist eine Verteilungsleitung 21 gezeigt, die einen aus Vollmaterial bzw. einen aus einer Vielzahl von Einzellitzen zusammengesetzten Leiter 80 aus Metall 81 bzw. Karbonfasern umfaßt. Dieser Leiter 80 ist mit einer Silberschicht 82 umgeben und in einem leitenden Kunststoff 83 in der Art eines Duroplastes mit einem makromolekularen Aufbau, z.B. in einem Acrylat mit mindestens zum Teil vernetzten Polymeren eingebettet.

Der Vorteil der erfindungsgemäß verwendeten Kunststoffe 72,75 bzw. 83 liegt darin, daß diese Kunstharz-Dispersionen, Kunstharz-Lösungen oder Kunstharze mit Metall-oder Halbmetallverbindungen oder deren Lösungen in einer Menge versetzt enthält, sodaß auf ein Kunstharz-Molekül annähernd ein Metall-oder Halbmetallatom kommt und der, nach dem Mischen und der Zugabe von Reduktionsmittel in geringem Überschuß oder durch an sich bekannte thermische Zersetzung Metall oder Halbmettallatome enthält und bei dem gebildete oder noch vorhandene Ionen ausgewaschen und die Dispersionen, Lösungen oder Granulate mit Graphit oder Ruß versetzt weiterverarbeitet sind. Überraschend ist bei dem Einsatz derartiger Kunststoffe, daß sie gegenüber mechanischen und thermischen Beanspruchungen wesentlich widerstandsfähiger sind, da die Leitfähigkeit unabhängig von den im Kunststoff eingebetteten freischwebenden Leiterteilchen 84 -wie schematisch über einen Teil des Kunststoffes 83 dargestellt -ist, d.h. die leitende Verbindung im Kunststoff wird nicht über die Leiterteilchen 84, sondern durch das Anhaften der Silberionen in den Hohlräumen der großen Kunststoffmoleküle erreicht, wobei durch das Reduzieren der Silberionen der Kunststoff Halbleitereigenschaften annimmt. Dadurch ist es möglich, mit einem Graphitpulveranteil in einer Menge von 40 %, bezogen auf den Kunststoff, auszukommen, um den leitenden Kunststoff in seinen Eigenschaften auf das Anwendungsgebiet bei erfindungsgemäßen Verteilungsleitungen einzustellen.

Die Details eines derartigen Kunststoffes sind in der österreichischen Patentschrift Nr. 313 588 beschrieben.

Derartige Kunststoffe sind nicht nur resistent gegenüber chemischen und elektrochemischen Einflüssen, sondern weisen auch eine hohe Alterungsbeständigkeit auf, da sie keine Ionen enthalten und sich dadurch bei Einwirkung von elektrischen Strömen kaum verändern.

Die vorstehend beschriebenen Kunststoffe sind in Verbindung mit den verschiedenen, in den Fig. 1 bis 4 gezeigten Ausführungsbeispielen mit Vorteil anwendbar und haben sich bei den vorstehend beschriebenen Versuchen außerordentlich bewährt. Ein weiterer Vorteil dieser Kunststoffe liegt darin, daß sie eine hohe Oberflächenadhäsion und Oberflächenrauhigkeit aufweisen, sodaß die Schwermetallionen bzw. die aus den Salzen ausgeschiedenen Kationen an diesem Kunststoff anhaften und gebunden werden, sodaß sie dem Vegetationsbereich voll entzogen sind.

Selbstverständlich ist es im Rahmen der Erfindung auch möglich, die durch Verteilungsleitungen 22 gebildeten Elektroden 21 quer zur Längsrichtung derselben mittels Distanzhalter im Abstand zu verbinden, sodaß beim Einbringen in die Bodenbereiche ein etwa gleichmäßiger Abstand zwischen den Verteilungsleitungen 22 eingehalten werden kann. Damit ergibt sich zwar ebenfalls eine netz-bzw. gitter förmige Anordnung, jedoch besteht der Unterschied darin, daß die leitende Verbindung überwiegend in Längsrichtung der einzelnen Verteilungsleitungen gegeben ist. Es wird jedoch auch bei dieser Ausführungsform notwendig sein, in gewissen größeren Abständen Querverbindungen zwischen den einzelnen Verteilungsleitungen 22 herzustellen, um bei einer Unterbrechung einer dieser Leitungen eine By-Pass-Wirkung über eine andere Verteilungsleitung herstellen zu können. Weiters ist es sehr wesentlich, daß die Verteilungsleitungen bzw. die zum Einsatz kommenden Netze äußerst flexibel und spannungsfrei sind, sodaß es beim Verformen derselben nicht zum Aufbau einer Rückfederungskraft kommt.

## Ansprüche

1. Verfahren zur Erhöhung der Bodenfeuchtigkeit auf elektroosmotischem Weg, bei der eine im Vegetationsbereich von Böden unter der Bodenoberfläche verlegte als Kathode wirkende Elektrode über ein Leitungssystem an eine in einem tieferen Bodenbereich verlegte positive Elektrode angeschlossen wird, worauf der über das elektrische Feld geschlossene Stromkreis mit Eigen-Potentialdifferz oder mit Fremdspannung betrieben wird, dadurch gekennzeichnet, daß in einem ersten Verfahrensschritt ein elektrisches Feld zwischen einer, in einer Bodenschicht (2) unterhalb der Wurzeln (9,10,11,12) verlegten positiven Elektrode (62) und einer, zwischen den Wurzelenden (28,59) und der Bodenoberfläche (3) verlegten negativem Elektrode Kathode (61) aufgebaut und danach ein tieferer, insbesondere wasserführender Bereich (14) über eine positive Elektrode als Anode (50) aktiviert wird und mit den beiden an negatives Potential angeschlossenen, im Bereich der Wurzeln angeordneten Elektroden (61,62) zusammengeschaltet wird, wobei vorzugsweise die beiden negativen Elektroden (61,62) miteinander verbunden werden.

2. Vorrichtung zum Aufbau eines elektrischen Feldes zur Durchführung des Verfahrens nach Anspruch 1, dadurch gekennzeichnet, daß eine die Kathode bildende Elektrode (61) im Bereich der Wurzeln und eine weitere, eine Anode bildende Elektrode (62) in einem tieferen, den Wurzelenden (59) nahe benachbarten Bodenbereich und eine, die Anode (70) bildende Elektrode (68) in dem tieferen, insbesondere wasserführenden Bodenbereich (14) angeordnet ist.

3. Vorrichtung nach Anspruch 2, dadurch gekennzeichnet, daß eine die Kathode bildende Elektrode (61) im Bereich der Wurzeln und eine weitere, wahlweise eine Anode oder Kathode bildende Elektrode (62) in einem tieferen, den Wurzekenden - (59) nahe benachbarten Bodenbereich und eine, die Anode (70) bildende Elektrode (68) in dem tieferen, insbesondere wasserführenden Bodenbereich (14) angeordnet ist.

4. Vorrichtung nach einem der Ansprüche 2 oder 3, dadurch gekennzeichnet, daß im Vegetationsbereich (2) des Bodens (1) mehrere parallel zueinander verlaufende Kathoden (20) bildende Elektroden (21) angeordnet sind, wobei jeweils mehrere Kathoden (20) über das Leitungssystem (23) mit einer in einem tieferen, wasserführenden Bodenbereich (14), z.B. in einem Brunnen (16) angeordneten Anoden (25) zusammengeschaltet sind.

5. Vorrichtung nach einem der Ansprüche 2 bis 4, dadurch gekennzeichnet, daß die der Bodenoberfläche (3) benachbarte Elektrode (37,61), insbesondere die Kathode (20,38) im Vegetationsbereich (2) des Bodens (1) zwischen den Wurzelenden - (28,59) der Pflanzen (8,42) sowie der Bodenoberfläche (3) angeordnet ist.

6. Vorrichtung nach einem der Ansprüche 2 bis 5, dadurch gekennzeichnet, daß zwischen der Anode (25,44,70) und der Kathode (20,38,57) eine Energiequelle (29) mit einer Spannungsabgabe von 6 Volt und einer Stromabgabe von ca. 50 Miliampere angeordnet ist.

# Fig. 1

# Fig. 2

# Fig. 3

**Fig. 4**

**Fig. 5**

**Fig. 6**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A- 693 414 (ZACHER)<br>* Seite 1, Zeilen 33-47; Seite 2, Zeilen 72-90; Figur 5 *<br><br>--- | 1 | A 01 G 7/04<br>A 01 G 25/00 |
| D,A | FR-A-2 403 424 (PAYSANT)<br>* Seite 1, Zeile 27 - Seite 2, Zeile 8 *<br><br>----- | 1 | |

RECHERCHIERTE
SACHGEBIETE (Int. Cl.4)

A 01 G
A 01 N
E 02 D

Der vorliegende Recherchenbericht wurde für alle Patentansprüche erstellt.

| Recherchenort | Abschlußdatum der Recherche | Prüfer |
|---|---|---|
| DEN HAAG | 29-07-1986 | HERYGERS J.J. |